# DEMANDE DE BREVET EUROPEEN

(11) **EP 1 201 567 A1**
(43) Date de publication de la demande: **02.05.2002**
(21) Numéro de dépôt: 01402762.7
(22) Date de dépôt: 24.10.2001
(51) Int. Cl.: B65D 88/62, B60P 1/60

(54) **Reservoir pour un véhicule industriel et procédé de vidange d'un tel reservoir**

(30) Priorité: 27.10.2000 FR 0013874
(71) Demandeur: General Trailers France, 91130 Ris Orangis (FR)
(72) Inventeur: Gressier, Christophe, 59251 Allennes les Marais (FR); Bailleux, Pierre, 59242 Templeuve (FR); Pruvost, Marc, 59800 Lille (FR)
(74) Mandataire: Michelet, Alain

(57) **Abrégé**

L'invention concerne un réservoir (1) pour un véhicule industriel destiné au transport de produits secs en vrac, comprenant une paroi extérieure rigide définissant un volume (15A, 16A) du réservoir et une paroi intérieure souple (12A) partageant ce volume en deux volumes partiels (15A, 16A).

La paroi souple (12A) est formée par une membrane élastique partageant le volume du réservoir en un volume supérieur (15A) pour le stockage d'un produit sec en vrac et un volume inférieur (16A) destiné à être rempli avec un gaz de travail pour un soulèvement programmé du produit sec lors de la vidange du réservoir (1).

## Description

L'invention concerne un réservoir pour un véhicule industriel destiné au transport de produits secs en vrac et un procédé de vidange d'un tel réservoir.

Dans le cadre de la présente invention, le terme " produit sec " désigne tout produit non liquide et non pâteux.

Le transport de produits secs en vrac tels que des produits en poudre ou en grain est habituellement fait au moyen de véhicules industriels comportant un réservoir dans lequel le produit sec est chargé. Ces véhicules industriels peuvent être des remorques, des semi-remorques, des porteurs, des caisses mobiles, des silos mobiles ou des conteneurs. Quel que soit le type de véhicule industriel, le réservoir comprend une paroi extérieure rigide définissant un volume du réservoir. Le réservoir est rempli par gravité ou par voie pneumatique. La vidange du réservoir est effectuée soit également par voie pneumatique, soit par bennage du réservoir à l'aide d'un vérin, soit par une combinaison de ces deux techniques.

La technique évoquée en premier, la vidange pneumatique, du fait du recours à une source d'air comprimé ou d'un autre gaz sous pression, implique un appareillage assez conséquent. Cet appareillage doit être emporté par le véhicule industriel, ou, le cas échéant, par le tracteur ou être mis à disposition à l'endroit où la vidange a lieu.

La technique évoquée en second, le bennage du réservoir, implique d'abord un vérin assez important, par exemple d'une portée de 8 m, et la place sur le véhicule industriel pour mettre en place ce vérin et un groupe hydraulique correspondant avec une source d'énergie. En outre, les véhicules industriels prévus pour le bennage ont un poids à vide plus élevé que d'autres véhicules industriels du fait que le réservoir doit être supporté par un châssis basculant. De plus, un véhicule industriel en état de bennage, c'est-à-dire lorsque le réservoir est basculé pour être vidangé, est exposé aux effets du vent et, pour le moins, est tributaire de la stabilité du sol sur lequel des béquilles du véhicule doivent s'appuyer.

Le but de l'invention est de remédier aux inconvénients évoqués ci-avant.

Plus particulièrement, l'invention doit proposer une solution qui permette d'éviter le recours au bennage du réservoir d'un véhicule industriel pour le vidanger, ou à d'autres techniques impliquant un appareillage assez conséquent.

Avantageusement, ce problème doit être résolu par une solution permettant une construction auto-portante du véhicule industriel.

L'invention concerne un réservoir pour un véhicule industriel destiné au transport de produits secs en vrac, le réservoir ayant au moins une cuve et la cuve, ou chacune des cuves, comprenant une paroi extérieure rigide définissant un volume de la cuve et une paroi intérieure souple partageant ce volume en deux volumes partiels.

Conformément à l'invention, la paroi souple est formée par une membrane élastique partageant le volume de la cuve en un volume supérieur destiné à recevoir des produits secs en vrac et un volume inférieur destiné à être rempli par un gaz de travail pour un soulèvement programmé des produits secs lors de la vidange du réservoir.

Des réservoirs comportant une cuve formée par une paroi extérieure rigide définissant un volume de la cuve et une paroi intérieure souple partageant ce volume en un volume supérieur et un volume inférieur sont décrit par exemple dans les documents US-A-3.213.913 et GB-A-2.110.192. Dans chacun des ces réservoirs, la paroi souple forme avec la paroi rigide une sorte de sac gonflable qui, lors du remplissage avec un gaz de travail, soulève le produit sec en vrac contenu dans le réservoir pour le faire sortir de celui-ci. Ce travail d'expulsion nécessite de disposer d'un gaz de travail assez fort en pression.

Le réservoir de l'invention, grâce à sa membrane élastique, se sert de l'effet de la gravité pour tendre la membrane lors du remplissage du réservoir et utilise le gaz de travail uniquement pour maintenir l'écoulement du produit sec, lors de la vidange du réservoir. Il n'y a donc ni soulèvement de l'ensemble que constitue le réservoir avec son chargement, le produit sec à l'intérieur, ni expulsion du produit sec moyennant un gaz sous pression. Au contraire, le produit sec est soulevé moyennant un gaz de travail seulement à partir du moment où la force de rappel élastique de la membrane ne suffit plus toute seule pour assurer l'écoulement du produit sec. L'action du gaz de travail intervient donc de façon progressive et programmée en fonction de l'avancement de la vidange du réservoir. L'invention repose donc sur un principe d'assistance de l'écoulement naturel du produit sec.

Un autre avantage de l'invention est celui d'un besoin réduit en énergie. Pour soulever le produit pendant la vidange, des pressions de l'ordre de quelques dixièmes de bar suffisent. Grâce à cela, le remplissage du volume inférieur de la cuve peut être effectué par un compresseur de faible puissance ou un ventilateur. Dans un cas comme dans l'autre, l'appareillage peut être considéré comme négligeable par rapport à la puissance et à l'importance des appareils nécessaires pour la vidange des réservoirs utilisés jusqu'à maintenant.

L'invention se distingue donc par l'utilisation d'une membrane élastique qui se différencie d'une paroi souple non élastique.

En effet, lors du remplissage de la cuve, le produit à charger étend la membrane élastique de plus en plus jusqu'à ce que la membrane épouse au moins la plus grande partie de la paroi extérieure de la cuve. Ceci est valable aussi bien pour une membrane élastique qui, au repos, s'étend approximativement horizontalement, que pour une membrane élastique qui, au repos, s'étend selon un plan incliné ou selon une surface courbée.

Lorsque l'orifice de vidange de la cuve est ouvert, le produit sec s'écoule sous l'effet de la gravité. Lorsque cet écoulement naturel ralentit ou même s'arrête, l'introduction d'un gaz de travail dans le volume inférieur soulève le produit et crée ainsi de nouvelles données géométriques grâce auxquelles la gravité peut agir à nouveau pour poursuivre et accélérer l'écoulement naturel du produit à vidanger. Le soulèvement du produit est en partie réalisé par le rappel élastique de la membrane suite à l'allégement progressif du produit déformant la membrane.

Selon l'état des produits secs et leur nature, il peut être utile d'améliorer cet écoulement naturel par des mesures d'assistance connues en elles-mêmes telles que, par exemple la fluidisation des produits secs. L'intérêt d'apporter cette assistance complémentaire à l'écoulement dépend du cahier des charges du réservoir ou du véhicule industriel. L'effet de telles mesures est limité à l'orifice de vidange du réservoir, n'a pas de conséquence directe sur la présente invention et ne sera pas considéré davantage en détail dans la présente description.

Dans le cas d'un réservoir constitué de deux ou plusieurs cuves, le remplissage de chacun des volumes inférieurs des cuves avec un gaz de travail peut être effectué simultanément ou successivement selon les possibilités de déchargement au lieu de vidange.

L'invention concerne également les caractéristiques ci-après considérées isolément ou selon toutes leurs combinaisons techniquement possibles:
- La membrane a une élasticité variable, fonction du point considéré. Cette élasticité variable peut être obtenue par une épaisseur variable de la membrane élastique sur la totalité de sa surface. Selon une variante, l'élasticité peut être variée par des bandes de différentes élasticités collées, galvanisées ou autrement solidarisées avec la membrane. De telles bandes peuvent être placées à des distances égales l'une de l'autre ou à des distances variables l'une de l'autre ou en croisée sur la surface totale de la membrane. Selon une autre variante, l'élasticité peut être variée par une tension localement différente d'une partie à l'autre de la membrane.
- Le réservoir est pourvu de moyens permettant de limiter l'extension de la membrane. Ces moyens peuvent être constitués par des câbles, élastiques ou non, tendus au-dessus de la membrane flexible dans des parties spécifiques du réservoir, par exemple proches de l'office de vidange ou, dans la partie supérieure du réservoir, proches d'un trou d'homme. Ces moyens peuvent également être constitués par des boudins gonflables disposés sur la face supérieure de la membrane ou par des arceaux ou des plaques montés dans la partie supérieure de la cuve.
- Le réservoir est pourvu de moyens permettant de limiter les mouvements de la membrane. En plus, ou à la place, des moyens évoqués plus haut pour contrôler l'élasticité de la membrane, et par là, l'extension de la membrane, la membrane et le fond de la cuve peuvent être pourvus de moyens mécaniques tels que des attaches qui permettent, reliées entre elles, de limiter le mouvement et l'extension de la membrane par rapport au fond de la cuve.
- La membrane est réalisée en un matériau chimiquement inerte et supportant des températures moyennes allant jusqu'à environ 100 °C.
   L'inertie chimique de la membrane élastique est à choisir de façon qu'il y a compatibilité entre son matériau et les produits devant être transportés dans le réservoir selon le cahier des charges établi pour le réservoir. La membrane élastique doit pouvoir supporter sans détérioration ni vieillissement des températures allant au moins jusqu'à 80°C, de préférence jusqu'à environ 100°C. La température de 80°C correspond à la température maximale de chargement de la plupart des produits transportés de la sorte. Lors du nettoyage de la cuve avec de la vapeur, des températures instantanées de l'ordre de 110°C peuvent être rencontrées.
- Le matériau de la membrane est choisi parmi des caoutchoucs synthétiques tels que des élastomères.
- La membrane est réalisée en un caoutchouc naturel tel que le Latex®.

L'invention concerne également un procédé de vidange d'un réservoir d'un véhicule industriel destiné au transport de produits secs en vrac, le réservoir comportant au moins une cuve et la cuve comprenant une paroi extérieure rigide définissant un volume de la cuve et une membrane élastique partageant le volume de la cuve en un volume supérieur destiné à recevoir des produits secs en vrac et un volume inférieur destiné à être rempli par un gaz de travail pour un soulèvement programmé des produits secs lors de la vidange du réservoir.

Conformément à l'invention, le procédé comprend les étapes:
- ouverture d'un orifice de vidange de la cuve,
- écoulement d'une première partie du produit sec,
- remplissage programmé du volume inférieur de la cuve par un gaz de travail pour soulever progressivement le produit sec jusqu'à l'arrêt de l'écoulement du produit.

Selon la nature ou l'état du produit sec, il peut être avantageux que le procédé de vidange comprenne également les étapes;
- vérification de la vacuité de la cuve,
- en cas de présence de produit sec restant, vidange pour le moins partiel du volume inférieur et
- répétition, dans l'ordre, de l'étape de remplissage programmé du volume inférieur de la cuve pour soulever progressivement le produit sec jusqu'à l'arrêt de l'écoulement du produit et des étapes de vérification de la vacuité du réservoir et de la vidange éventuelle du volume inférieur autant de fois que nécessaire pour obtenir la vacuité de la cuve.

D'autres caractéristiques et avantages de l'invention ressortiront de la description de quelques modes de réalisation de l'invention à l'aide des dessins. Dans ces dessins:

Les Figures 1 à 4 indiquent des dispositions d'une ou de deux membranes flexibles dans un réservoir à cuve unique.

La Figure 5 montre la disposition de la membrane élastique dans un réservoir ayant trois cuves.

Les Figures 6 et 7 montrent la membrane flexible sous l'action d'un gaz de travail.

La Figure 8 montre une membrane élastique sous l'action à la fois d'un gaz de travail et des moyens limitant l'extension de la membrane, et

La Figure 9 montre en perspective le principe d'une disposition de la membrane élastique en entonnoir.

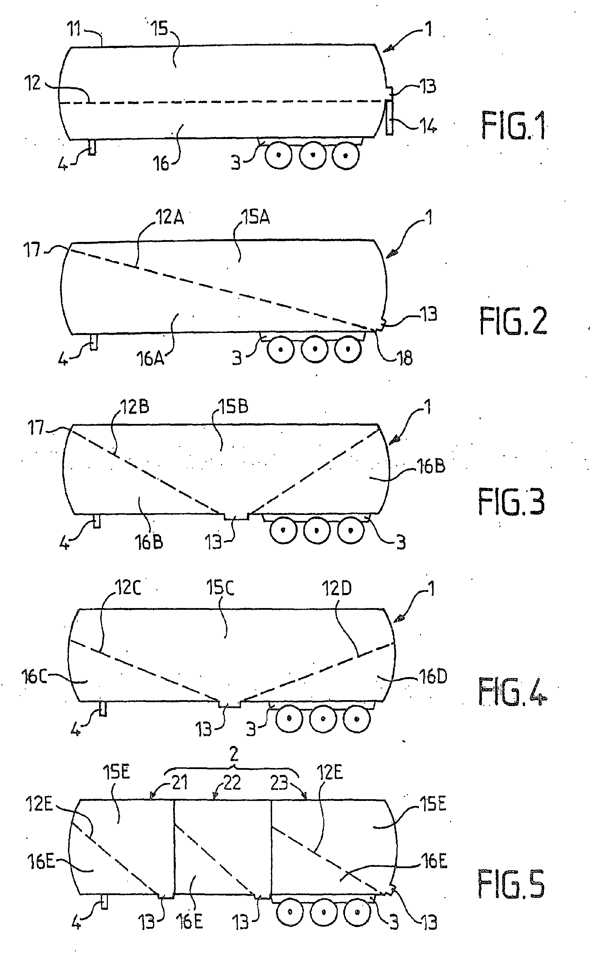

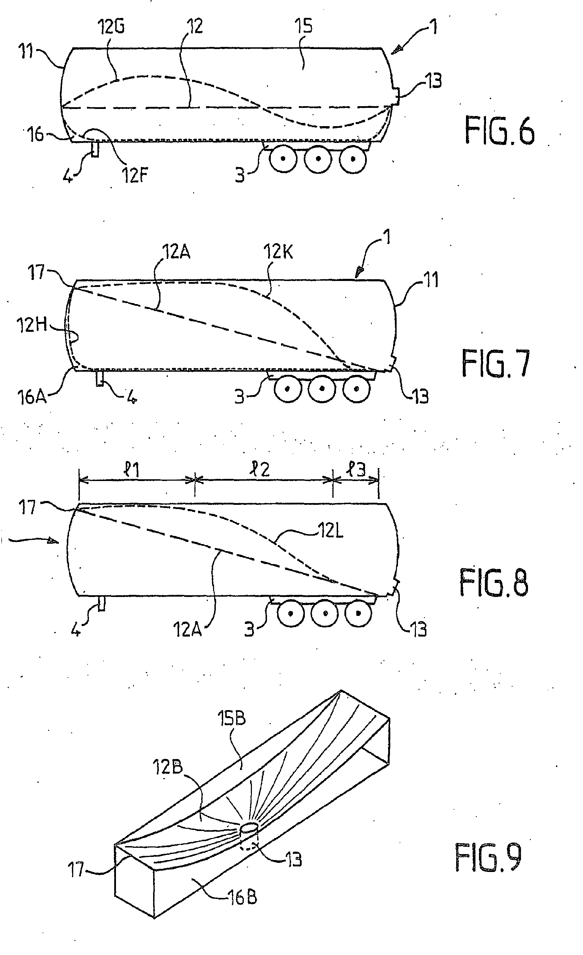

Les Figures 1 à 8 montrent les dispositions de l'invention à l'exemple d'une semi-remorque citerne auto-portante. Plus précisément, les Figures 1 à 4 et 6 à 8 évoquent la version d'un réservoir à cuve unique alors que la Figure 5 fait référence à un réservoir à trois cuves.

Ces semi-remorques sont constituées d'un réservoir 1 à cuve unique ou 2 à cuve triple, d'un train roulant 3 monté directement sous le réservoir 1 ou 2 et d'une cheville ouvrière 4 également montée directement sous le réservoir 1 ou 2.

Dans la description ci-après, référence sera faite uniquement au réservoir 1 ou à l'une des cuves 21, 22, 23 du réservoir 2 sans préciser le type de véhicule industriel auquel ce réservoir s'applique. De plus, sauf mention particulière, aucune différence n'est faite dans la présente description entre le réservoir à cuve unique et une cuve. Ainsi, de manière générale, les caractéristiques ci-après énoncées par rapport à un réservoir à cuve unique, sont en même temps valables pour une cuve. Les caractéristiques correspondantes portent le même numéro de référence, le cas échéant décliné par ajout d'une lettre.

Le réservoir représenté sur la Figure 1 comprend une paroi extérieure rigide 11 qui définit un volume du réservoir, et une membrane élastique 12 représentée en ligne interrompue. La disposition de la ligne interrompue correspond à un des côtés latéraux longitudinaux de la périphérie de la membrane 12. Dans la configuration représentée sur la Figure 1, la membrane élastique 12 est disposée proche d'un plan horizontal, l'inclinaison étant inférieure à 5° par rapport à l'horizontale.

Le réservoir comprend par ailleurs une ou plusieurs ouvertures de chargement (non représentée(s)) et au moins un orifice de vidange 13 sur lequel est fixée, le cas échéant, une tubulure de sortie 14.

La membrane 12 partage le volume du réservoir 1 en un volume supérieur 15 pour le stockage d'un produit sec en vrac et un volume inférieur 16 destiné à être rempli, lors de la vidange du réservoir avec un gaz de travail.

La Figure 2 représente le réservoir 1 avec une membrane élastique 12A qui s'étend au repos selon un plan incliné à partir d'un niveau de fixation 17 à l'extrémité opposée à celle pourvue d'un orifice de vidange 13, dans la moitié supérieure de la paroi rigide 1, vers un niveau de fixation 18 proche du fond du réservoir 1.

Par " niveau de fixation ", il convient de comprendre une ligne droite horizontale ou une ligne légèrement courbe essentiellement horizontale dans le cas d'un réservoir parallélépipédique et une ligne en arc passant en réalité par plusieurs niveaux sur la paroi rigide 11 du réservoir, lorsque ce dernier a une forme cylindrique de révolution ou une forme cylindrique à section transversale elliptique.

Dans la disposition selon la Figure 2, la membrane élastique 12A partage le volume du réservoir 1 en un volume supérieur 15A et un volume inférieur 16A.

La disposition de la Figure 3 représente une membrane élastique 12B ayant la forme d'un entonnoir tendu à partir d'un niveau supérieur de fixation 17, proche du sommet du réservoir 1 vers un niveau de fixation inférieur 18 proche de l'orifice de vidange 13 disposé au centre du fond de réservoir. La membrane élastique 12B partage le volume du réservoir 1 en un volume supérieur 15B et un volume inférieur 16B.

La disposition de la Figure 4 représente une membrane élastique 12C tendue à partir d'une extrémité du réservoir 1 vers l'orifice de vidange central 13 et une membrane élastique 12D tendue à partie de l'autre extrémité du réservoir 1 vers l'orifice de vidange 13. Ces membranes élastiques 12C et 12D partagent le volume du réservoir 1 en un volume supérieur 15C et des volumes inférieurs 16C et 16D. Le gaz de travail peut être introduit dans les volumes inférieurs 16C et 16D successivement ou simultanément ou par répétition alternée.

La disposition représentée sur la Figure 5 est celle de trois membranes élastiques 12E montées respectivement dans les cuves 21, 22 et 23. Chaque membrane élastique 12E partage le volume de la cuve correspondante en un volume supérieur 15E et un volume inférieur 16E.

Les représentations du réservoir et de la membrane élastique dans les dessins sont schématiques. Elles font notamment abstraction de la déformation naturelle de la membrane du fait de son propre poids. En effet, il est rappelé que, pour une citerne semi-remorque, la membrane peut avoir des dimensions de 2,50 à 3 m en largeur et de l'ordre de 17 m en longueur.

De même, l'inclinaison de la membrane au repos, c'est-à-dire sans déformation par un produit chargé, est en réalité souvent moins forte que les figures ne le laissent supposer. Ainsi, l'inclinaison d'une membrane montée dans une cuve de 17 m de longueur et d'un diamètre de 2,5m est de l'ordre de 5° à 10°, fonction du niveau de fixation à l'intérieur de la cuve.

En ce qui concerne le choix du matériau de la membrane il convient de rappeler que la membrane doit être chimiquement inerte par rapport aux produits destinés à être transportés dans le réservoir, et doit supporter des températures moyennes de l'ordre de 80 à 100°C et pouvoir résister à des pressions de l'ordre de 2 bars, au cas où il faut recourir à la fluidisation des produits secs lors de la vidange. Par ailleurs, l'élasticité de la membrane doit permettre une déformation de 150 à 200% sans déformation permanente et résister au piétinement lors des travaux de nettoyage. La membrane doit enfin être également chimiquement inerte à l'égard des produits de nettoyage, tels que des détergents alimentaires si les produits transportés font partie de la catégorie des aliments et des acides dilués destinés au nettoyage et supporter le séchage par vapeur ou air chaud.

Lorsqu'un réservoir est rempli avec un produit sec à transporter, que ce produit soit pulvérulent ou granuleux, ce produit déforme la membrane 12 lors du chargement du réservoir 1, en fonction de son poids, du fait de l'élasticité de la membrane et puisque le volume inférieur est relié à l'atmosphère pendant la phase de remplissage de la cuve. Lorsque le réservoir est entièrement rempli, la membrane 12 épouse presque entièrement la paroi rigide 11 du réservoir 1 comme cela est représenté schématiquement par les lignes en pointillés 12F et 12H sur les Figures 6 et 7. Si le poids du produit à stocker est suffisamment grand, la membrane épouse même entièrement la paroi rigide.

Lors de la vidange du réservoir 1, un gaz de travail, de préférence de l'air comprimé, est injecté avec une pression faible, par exemple de l'ordre de 0,1 à 0,2 bar, dans le volume inférieur 16 (Figure 6) ou 16A (Figure 7) pour soulever la membrane 12 et, par cela, le produit à vidanger. L'introduction du gaz de travail se fait progressivement avec un débit d'air juste suffisant pour maintenir l'écoulement naturel du produit à évacuer.

La Figure 6 représente par la ligne interrompue 12G un état intermédiaire de la membrane horizontale 12 à un moment donné pendant la vidange du réservoir 1.

On peut voir que le volume inférieur 16 est déjà supérieur à la moitié du volume du réservoir 1 et que la membrane 12 s'élève déjà, dans à peu près les deux tiers avant du réservoir, au-dessus du plan de repos de la membrane. Dans la partie restante arrière du réservoir, la membrane s'étend encore essentiellement à un niveau inférieur au plan de repos, selon le poids du produit restant dans le réservoir à cet instant. Pour assurer un écoulement complet du produit, la membrane 12 sera élevée encore davantage jusqu'à ce qu'elle s'étende entièrement au-dessus du plan de repos.

Au cas, où le produit à décharger ne s'écoule pas suffisamment bien par ce qu'il n'est pas assez sec ou parce que la granulométrie du produit est trop fine, il peut être avantageux de surveiller l'écoulement et, lorsque le produit a ralenti en écoulement, de descendre la membrane 12 au moins partiellement, afin que le produit restant soit à la fois décompacté et rassemblé et puisse commencer un nouveau cycle d'écoulement. Ce cycle de relâchement et reprise de l'assistance à l'écoulement apporté par le remplissage du volume inférieur 16 associé à une vérification de la vacuité du réservoir est alors répété autant de fois que nécessaire pour obtenir la vacuité du réservoir.

Le remplissage et la vidange d'un réservoir pourvu d'une membrane inclinée, représenté sur la Figure 7, correspond pour l'essentiel à la description qui vient d'être faite en relation avec la Figure 6. Lorsque le réservoir 1 est rempli d'un produit en vrac, la membrane élastique 12A est déformée de manière à ce que la membrane épouse, dans le cas idéal, entièrement, sinon presque entièrement la paroi 11 du réservoir. Cette position de la membrane élastique 12A est représentée par la ligne interrompue 12H. La ligne 12K symbolise la position de la membrane 12A lors d'une vidange déjà assez avancée. La membrane 12A épouse sur une grande partie la partie supérieure de la paroi rigide. Ce n'est qu'uniquement dans une partie proche de l'office de vidange 13 que la membrane 12A s'étend en dessous du plan incliné de repos de la membrane.

La Figure 8 représente une variante de la situation représentée sur la Figure 7. Cette variante est obtenue par une limitation de l'extension de la membrane 12A. L'extension limitée est représentée par la ligne interrompue 12L.

Selon l'exemple représenté, la membrane élastique 12A est supposée avoir trois sections d'élasticité différentes, correspondant approximativement aux sections I1, I2 et I3 du réservoir. La section de la membrane 12A correspondant à la section I1 du réservoir a une élasticité correspondant à son matériau réalisé en une épaisseur donnée. Contrairement à cela, la deuxième partie de la membrane 12A, correspondant à la partie I2 du réservoir, est modifiée par des bandeaux élastiques introduits dans la masse de la membrane lors de sa fabrication. Cette deuxième partie de la membrane ne s'étend pas autant que la partie correspondante de la membrane représentée sur la Figure 7.

La troisième partie de la membrane 12A, qui s'étend dans la partie I3 du réservoir, ne dépasse pas vers le haut le plan de repos de la membrane, parce qu'elle est retenue par une ou plusieurs bandes flexibles mais non élastiques 19 attachées par leurs extrémités respectivement à la membrane 12A et le fond du réservoir. En variante, la membrane 12A peut également être retenue par des câbles ou des tiges montées juste au dessus de la membrane lorsqu'elle est au repos. De tels câbles ou tiges ne gênent pas la vidange du réservoir, mais apportent l'avantage, pour le moins par rapport à des moyens de rétention disposés en dessous de la membrane, tels que des bandes 19, de pouvoir être enlevés facilement lors du nettoyage du réservoir. De plus, cette variante réduit le risque d'endommager la membrane lors d'un piétinement de cette dernière pendant le nettoyage.

Quelle que soit la solution choisie pour limiter l'extension de la membrane à proximité de l'orifice de vidange, une telle limitation est recommandée pour éviter un engorgement de la sortie du réservoir.

## Revendications

1. Réservoir pour un véhicule industriel destiné au transport de produits secs en vrac, comportant au moins une cuve comprenant une paroi extérieure rigide (11) définissant un volume de la cuve et une paroi intérieure souple partageant ce volume en deux volumes partiels (15,16), à savoir un volume supérieur (15) destiné à recevoir des produits secs en vrac et un volume inférieur (16) destiné à être rempli par un gaz de travail pour un soulèvement programmé des produits secs lors de la vidange du réservoir,
**caractérisé en ce que** la paroi souple (12) est formée par une membrane élastique (12) agencée de façon que lors du remplissage de la cuve, le produit à charger étend la membrane de plus en plus jusqu'à ce que la membrane épouse au moins la plus grande partie de la paroi extérieure (11) de la cuve et que, lors de la vidange de la cuve, le soulèvement du produit est en partie réalisé par le rappel élastique de la membrane, suite à l'allégement progressif du produit déformant la membrane.

2. Réservoir selon la revendication 1, **caractérisé en ce qu'**il comporte au moins deux cuves (21, 22, 23).

3. Réservoir selon la revendication 1 ou 2, **caractérisé en ce que** la membrane (12E) a une élasticité variable, fonction du point considéré.

4. Réservoir selon l'une quelconque des revendications précédentes, **caractérisé en ce qu'**il est pourvu de moyens permettant de limiter l'extension de la membrane (12).

5. Réservoir selon l'une quelconque des revendications précédentes, **caractérisé en ce qu'**il est pourvu de moyens permettant de limiter les mouvements de la membrane (12).

6. Réservoir selon l'une quelconque des revendications précédentes, **caractérisé en ce que** la membrane (12) est réalisée en un matériau chimiquement inerte et supportant des températures allant jusqu'à environ 100 °C.

7. Réservoir selon la revendication 6, **caractérisé en ce que** le matériau de la membrane (12) est choisi parmi des caoutchoucs synthétiques.

8. Réservoir selon la revendication 6, **caractérisé en ce que** la membrane (10) est réalisée en un caoutchouc naturel tel que le Latex®.

9. Procédé de vidange d'un réservoir d'un véhicule industriel destiné au transport de produits secs en vrac, comprenant une paroi extérieure rigide définissant un volume du réservoir et une membrane élastique partageant le volume du réservoir en un volume supérieur pour le stockage d'un produit sec en vrac et un volume inférieur destiné à être rempli avec un gaz de travail pour un soulèvement programmé du produit sec lors de la vidange du réservoir,
**caractérisé par** les étapes
- ouverture d'un orifice de vidange du réservoir,
- écoulement d'une première partie des produits secs,
- remplissage programmé du volume inférieur du réservoir avec un gaz de travail pour soulever progressivement le produit sec jusqu'à l'arrêt de l'écoulement du produit.

10. Procédé selon la revendication 10, **caractérisé par** les étapes supplémentaires
- vérification de la vacuité du réservoir,
- en cas de présence de produits secs restants, vidange pour le moins partiel du volume inférieur et
- répétition, dans l'ordre, de l'étape de remplissage programmé du volume inférieur du réservoir pour soulever progressivement le produit sec jusqu'à l'arrêt de l'écoulement du produit et des étapes de vérification de la vacuité du réservoir et de la vidange éventuelle du volume inférieur autant de fois que nécessaire pour obtenir la vacuité du réservoir.
